# EUROPÄISCHE PATENTSCHRIFT

(11) **EP 0 804 853 B1**
(45) Veröffentlichungstag und Bekanntmachung des Hinweises auf die Patenterteilung: **10.03.1999**
(21) Anmeldenummer: 95940107.6
(22) Anmeldetag: 19.12.1995
(51) Int. Cl.: H04N 5/32

(54) **OPTISCHE ANORDNUNG UND VERFAHREN ZUM ÜBERTRAGEN UND UMWANDELN VON RÖNTGEN-PRIMÄRBILDERN**
OPTICAL ARRANGEMENT AND PROCESS FOR TRANSMITTING AND CONVERTING PRIMARY X-RAY IMAGES
DISPOSITIF OPTIQUE ET PROCEDE POUR TRANSMETTRE ET CONVERTIR DES IMAGES PRIMAIRES RADIOGRAPHIQUES

(30) Priorität: 20.01.1995 CH 156/95
(43) Veröffentlichungstag der Anmeldung: 05.11.1997
(73) Patentinhaber: Teleray AG, 6285 Hitzkirch (CH)
(72) Erfinder: LAUPPER, Ruedi, G., CH-6285 Hitzkirch (CH); WÄGLI, Peter, CH-5620 Bremgarten (CH)
(74) Vertreter: Hepp, Dieter
(86) Internationale Anmeldenummer: CH9500300
(87) Internationale Veröffentlichungsnummer: WO9622654

(56) Entgegenhaltungen:
- EP-A- 0 260 754
- EP-A- 0 262 267
- EP-A- 0 286 393
- EP-A- 0 618 719
- WO-A-91/14338
- WO-A-94/09391
- DE-C- 4 034 058
- US-A- 4 628 356
- US-A- 5 308 986

## Beschreibung

Die Erfindung betrifft eine optische Anordnung und ein Verfahren zum Uebertragen und Umwandeln von Röntgen-Primärbildern gemäss Oberbegriff der unabhängigen Patentansprüche.

Röntgenbilder im Bereich des sichtbaren Lichts werden traditionell an Flächen erzeugt, welche die vom durchstrahlten Objekt modulierten Röntgenstrahlen in sichtbares Licht umsetzen. Allgemein verbreitet werden dazu Szintillations-Folien eingesetzt. Derartige Folien enthalten z.B. Cäsiumiodid. Alternativ sind auch andere Primärbild-Anordnungen, wie z.B. beschichtete Glas- oder Kunststoff-Scheiben denkbar.

Zur Fernseh-Uebertragung von Röntgenbildern wurden auch schon Fernsehkameras eingesetzt. Dabei wird ein Röntgenbildverstärker verwendet, der die vom durchstrahlten Objekt modulierten Röntgenstrahlen aufnimmt und ein verstärktes Ausgangsbild über eine lichtstarke Optik auf die Projektionsfläche einer Fernsehkamera weitergibt. Die Fernsehkamera liefert elektrische Signale, die im Monitor zum Durchleuchtungsbild zurückverwandelt werden. Der Bildverstärker besteht dabei aus einer evakuierten Röhre, an dessen Stirnseite sich als Primärbild-Anordnung ein Röntgenleuchtschirm befindet. Unmittelbar dahinter befindet sich die Photokathode, aus der nach dem Lichteinfall Elektronen austreten, deren Zahl der Anregung des Leuchtschirm durch die Röntgenstrahlen proportional ist. Die Bildverstärkung entsteht dadurch, dass die emittierten Photoelektronen durch ein elektrisches Feld beschleunigt werden und den gegenüberliegenden Ausgangsleuchtschirm zum mehrfach intensivierten Leuchten anregen. Das Ausgangsbild kann auf verschiedene Weise zur Eingangsoptik der Fernsehaufnahmeröhre übertragen werden. Bekannt sind z.B. elektrostatische Abbildungen, bei welchen das Bild auf dem Eingangs fenster elektronenoptisch auf das Ausgangs fenster verkleinert und so an das Fenster der Kamera angepasst wird. Es kann auch durch eine optische Linsenanordnung übertragen werden, bei der sich das Ausgangsbild des Bildverstärkers in der Brennebene eines ersten Objektivs befindet, wobei das Bild in der Brennebene des Kameraobjektivs erzeugt wird. Statt der optischen Uebertragung lässt sich das Bild von der Ausgangsseite des Bildverstärkers auch mittels Faseroptik auf die Eingangsoptik der Fernsehkamera übertragen.

Derartige Fernseh-Systeme sind ausserordentlich aufwendig, erfordern speziell angepasste Röntgengeräte und sind aufgrund des grossen Platzbedarfs in Standard-Röntgengeräte nicht integrierbar.

In der Praxis werden deshalb meist Laser-Image-Systeme eingesetzt, um Röntgenbilder in elektrische Signale umzuwandeln und die Bildsignale zu speichern, zu übertragen oder auf andere Weise zu verarbeiten. Bei Laser-Image-Systemen werden vorwiegend Speicherfolien verwendet, welche die modulierte Röntgenstrahlung in metastabilem Zustand speichern. Die Folien werden durch einen HeNe-Laser zum Leuchten angeregt. Dadurch kann das Signal elektrooptisch gewandelt werden. Alternativ können auch herkömmlich belichtete Filme "gescannt" werden. Dabei wird also das Primärbild auf der Folie bzw. dem Film erzeugt, was den Einsatz konventioneller Filmkassetten ("Bucky's") ermöglicht. Andererseits ist mit solchen Anordnungen keine On-Line-Uebertragung möglich, sondern zur Umwandlung ist ein separater Abtastvorgang erforderlich.

Aufgabe der Erfindung ist es, eine Anordnung und ein Verfahren zu schaffen, welche die On-Line-Erfassung und Uebertragung sowie die Darstellung von Röntgenbildern auf wirtschaftlich einfache Weise ermöglicht und auch das nachträgliche Umrüsten konventioneller Röntgengeräte technisch ermöglicht.

Aus dem Dokument EP-A-0 618 719 ist eine Anordnung gemäss dem Oberbegriff des Patentanspruchs 1 bekannt. In dieser bekannten Anordnung werden Einzel-Segmente eines auf einer flächigen Primärbild-Anordnung erzeugten sichtbaren Bildes mit einer Mehrzahl von optischen Systemen (Linsen) direkt auf je einem Wandler einer Wandleranordnung abgebildet. In dem Wandler wird das vom zugeordneten optischen System erzeugte Teilbild in elektrische Signale umgewandelt. Für jedes der Mehrzahl von optischen Systemen ist also je ein eigener Wandler, z.B. mit einer CCD-Kamera, erforderlich. Dadurch wird die ganze Anordnung kompliziert und teuer. Dieser Nachteil ist in der erfindungsgemässen Anordnung mit der die angegebene Aufgabe gelöst wird, dadurch vermieden, dass zwischen den optischen Systemen und der Wandleranordnung optische Bildleiter angeordnet sind, dass die Bildleiter in Gruppen zur Kombination von Teilbildern zu jeweils einem Zwischenbild zusammengefasst sind, so dass jedes Zwischenbild wenigstens zwei Segmente des Primärbildes enthält, und dass jede Gruppe von Bildleitern ausgangsseitig mit dem Eingang jeweils eines Wandlers der Wandleranordnung verbunden ist, um das betreffende Zwischenbild diesem Wandler zuzuführen.

Die Verwendung von Lichtleiterfasern in Anordnungen zum Übertragen und Umwandeln von Röntgenbildern ist an sich bekannt. Das Dokument EP-A-0 262 267 zeigt eine flächige Primärbild-Anordnung, die von einer Vielzahl von Röntgenstrahl-Detektoren gebildet ist. Dabei ist es möglich, dass jeder Röntgenstrahl-Detektor aus einem Szintillator und einem mit diesem über eine Lichtleiterfaser verbundenen Photosensor besteht. Es werden keine Abbildungen von Einzelsegmenten des Primärbildes erzeugt. Vielmehr sind die Szintillatoren einzeln direkt mit den Eingängen der Lichtleiterfasern gekoppelt, die das gesamte Primärbild parallel übertragen. Ähnliches gilt auch für die Anordnung gemäss dem Dokument EP-A-0 286 393, in welcher die Eingänge von Lichtleiterfasern direkt an eine flächige Primärbild-Anordnung angeschlossen sind. Die Lichtleiterfasern führen in mehreren Bündeln, entsprechend mehreren Bildleitern, zu CCD-Kameras, wobei jedem Bündel je eine Kamera zugeordnet ist.

Die Erfindung erreicht durch die Anordnung einer Mehrzahl von optischen Systemen zur Abbildung jeweils eines einem Einzel-segment des Primärbilds entsprechenden Teilbilds auf einem optischen Bildleiter sowohl geringe Bauhöhe als auch hohe Bildauflösung. Als optische Systeme lassen sich Linsenanordnungen einsetzen, die vorteilhaft matrixartig in Reihen und Spalten angeordnet sind. Die den einzelnen Linsenanordnungen bzw. Objektiven zugeordneten Bildleiter können ausgangsseitig spalten- oder reihenweise zusammengefasst werden. Alternativ können als optische Systeme auch Gradient-Index-Linsen oder Micro-Linsen eingesetzt werden. Bei konventionellen Linsen mit homogenem Brechungsindex werden die Lichtstrahlen bekanntlich an der Oberfläche, also im Bereich des Brechungs-Index-Wechsels gebeugt. Bei "Gradient-Index-Material" ist der Brechungsindex des Linsenmaterials selbst unterschiedlich, sodass das Licht kontinuierlich im Material und zusätzlich definiert an der Oberfläche gebrochen wird. Besonders geeignet für die Anwendung gemäss der Erfindung haben sich die sogenannten "Selfoc-Linsen", vertrieben von der NSG America, Inc. (Somerset, NJ 08873) oder bzw. der Nippon Sheet Glass Co. Ltd., Tokyo. Ihr Einsatz in "Fiber-scope" und "Endoscope" ist gebräuchlich.

Einfache technische Anpassbarkeit und niedrige Bauhöhe wird erfindungsgemäss vor allem weiter dadurch verbessert, dass Bildverstärker und Wandler zur Umwandlung der Lichtsignale in verarbeitbare elektrische Signale mittels eines Bildleiters mit dem optischen System verbunden sind. Dadurch kann der Wandler im Abstand vom optischen System angeordnet werden. Ausserdem lässt sich eine lösbare Verbindung vorsehen, mit welcher der Bildleiter mit dem Bildverstärker lösbar verbindbar ist. Auf diese Weise kann auch z.B. ein Wandler und/oder ein Bildverstärker abwechselnd mit verschiedenen optischen Systemen verbunden werden, womit die Kosten der Anordnung reduziert werden. Dies wird vor allem dadurch erreicht, dass für eine Mehrzahl von optischen Systemen nur ein relativ teurer Bildverstärker und ein Wandler, insbesondere eine Kamera vorgesehen werden muss.

Um den Ausgang des Bildverstärkers mit relativ grosser Fläche auf den Eingang der Kamera zu konzentrieren und die Lichtstrahlen entsprechend zu bündeln, ist vorzugweise ein Taper vorgesehen. Als Taper ist dabei ein Bildleiterbündel vorgesehen, das eingangsseitig eine grössere Fläche erfasst als ausgangsseitig.

Gemäss modifizierter Abbildng ist es möglich, das Bild zuerst mit einem Taper aufzuweiten und nach dem Bildverstärker wieder mit einem Taper auf den CCD-Array abzubilden. Dadurch wird auf dem Bildverstärker, welcher die Auflösung begrenzt, ein möglichst grosses Bild erzeugt. Somit kann die Begrenzung der Auflösung reduziert werden: Der Querschnitt des Bildleiters kann klein gemacht werden, wodurch sich die Kosten reduzieren. Durch den 2ten Taper kann eine optimale Anpassung an den CCD-Array erreicht werden.

Die optischen Systeme und die Bildleiter können erfindungsgemäss in einem Optik-Gehäuse angeordnet werden, das als Ersatz für die Rückwand eines Bucky einer Röntgenanlage vorgesehen wird.

Bildverstärker und Wandler können dabei mit einer lösbaren Steckerverbindung mit dem Bucky bzw. dem Optik-Gehäuse verbunden werden.

Durch die Zusammenfassung von Bildleitern, die jeweils Einzel-Segmente des Primärbildes übertragen, lassen sich Kombinationen von Teilbildern zu Zwischenbildern zusammenfassen, wobei jedes Zwischenbild wenigstens zwei Segmente des Primärbilds enthält. Auf diese Weise wird vor allem der Aufbau und die Optik von Bildverstärker und Wandler vereinfacht. Wenn z.B. vier etwa quadratische Einzel-Segmente einer Reihe oder Spalte zu einem Zwischenbild zusammengefasst werden, kann dieses so dargestellt werden, dass wiederum ein quadratisches Zwischenbild entsteht, dessen vier Quadranten jeweils einem Einzel-Segment des Primärbilds entsprechen. Die von der Kamera abgegebenen Bildsignale können dabei einfach den Einzel-Segmenten des Primärbildes bzw. den einzelnen Abschnitten oder Quadranten des Zwischenbilds zugeordnet werden, sodass die Verarbeitung in der EDV-Anlage im Sinne einer Kombination der Zwischenbilder zu Gesamt-Sekundärbildern ohne weiteres möglich ist.

Wenn die optischen Systeme relativ zur Primärbild-Anordnung verlagerbar angeordnet sind, können erfindungsgemäss kleinere oder grössere Segmente des Primärbilds abgebildet werden. Bei Darstellung eines Ausschnitts des Primärbilds durch die optischen Systeme (Zoom-Funktion) wird erreicht, dass die Auflösung des Sekundärbilds vergrössert wird.

Die Verarbeitung in der Datenverarbeitungsanlage kann auf konventionelle Weise erfolgen, z.B. können die zum Sekundärbild kombinierten Signale an einem Terminal oder an mehrere Terminals weitergegeben werden, die Signale lassen sich speichern oder Sekundärbilder können als Hardcopy z.B. über einen Plotter ausgegeben werden. Jedenfalls sind sämtliche Primärbilder On-Line in Sekundärbilder umwandelbar und von der Aufnahme bis zur Darstellung vergehen je nach Leistungsfähigkeit der eingesetzten EDV-Anlage nur wenige Sekunden.

Die Erfindung ist im folgenden in Ausführungsbeispielen anhand der Zeichnungen näher erläutert. Es zeigen:
- Figur 1: die schematische Darstellung einer optischen Anordnung zum Uebertragen und Umwandeln von Röntgenbildern in Verbindung mit einer EDV-Anlage,
- Figur 2: die schematische Darstellung einer optischen Anordnung gemäss Figur 1 in Draufsicht,
- Figur 3: die schematische Darstellung des Strahlengangs der Anordnung gemäss Figur 2,
- Figur 4: ein abgewandeltes Ausführungsbeispiel einer optischen Anordnung,
- Figur 5a: die schematische Darstellung der Zerlegung des Primärbilds in Einzel-Segmente und deren Zusammenfassung zu Zwischenbildern,
- Figur 5b: eine Anordnung gemäss Figur 5a und Figur 2, bei der die optischen Systeme parallel und senkrecht zur Primärbild-Anordnung verlagert sind, um einen kleineren Ausschnitt des Primärbilds abzubilden, in der Draufsicht,
- Figur 5c: eine Anordnung gemäss Figur 5b in schematischer Seiten-Darstellung,
- Figur 6: die Uebertragungs-Charakteristik der Teilbilder in einer optischen Anordnung gemäss Figur 2 und 3,
- Figur 7: die schematische Schnittdarstellung eines einzelnen optischen Systems wie es bei einer Anordnung gemäss Figur 4 zur Anwendung kommt, und
- Figur 8: das Blockschaltbild der Verarbeitung von Teilbildern bzw. von Zwischenbildern zu Sekundärbildern in einer EDV-Anlage gemäss Figur 1.

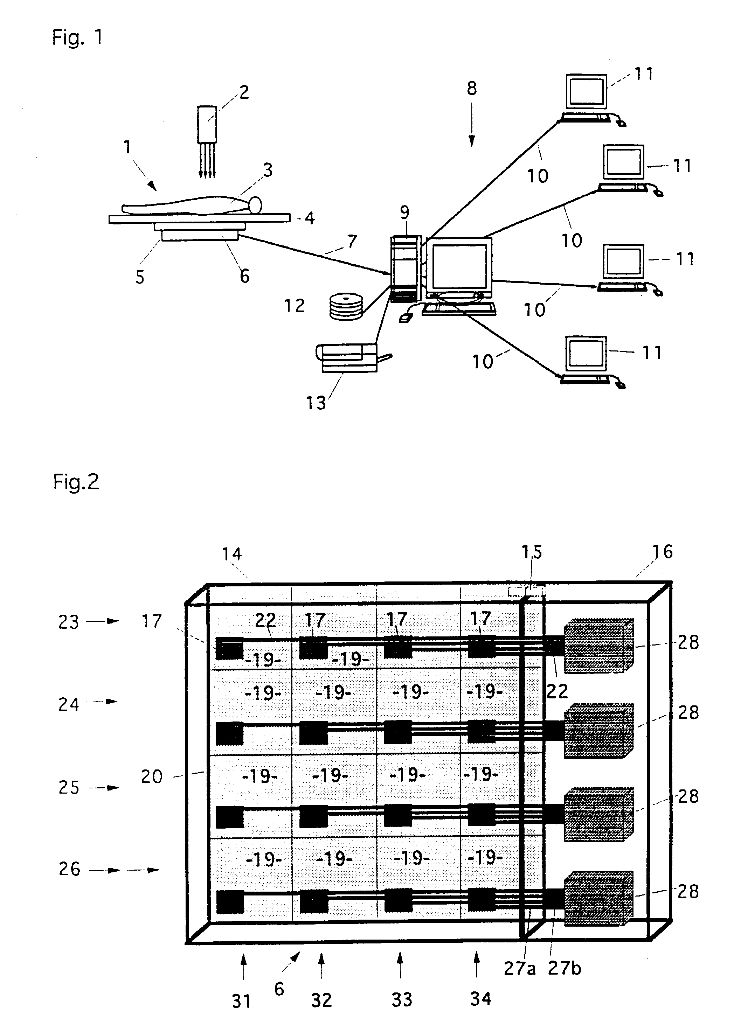

Figur 1 zeigt eine Röntgenanlage 1 mit einer Röntgenröhre 2, die Röntgenstrahlen abgibt, welche einen Patienten 3 durchdringen, der auf einem Tisch 4 liegt.

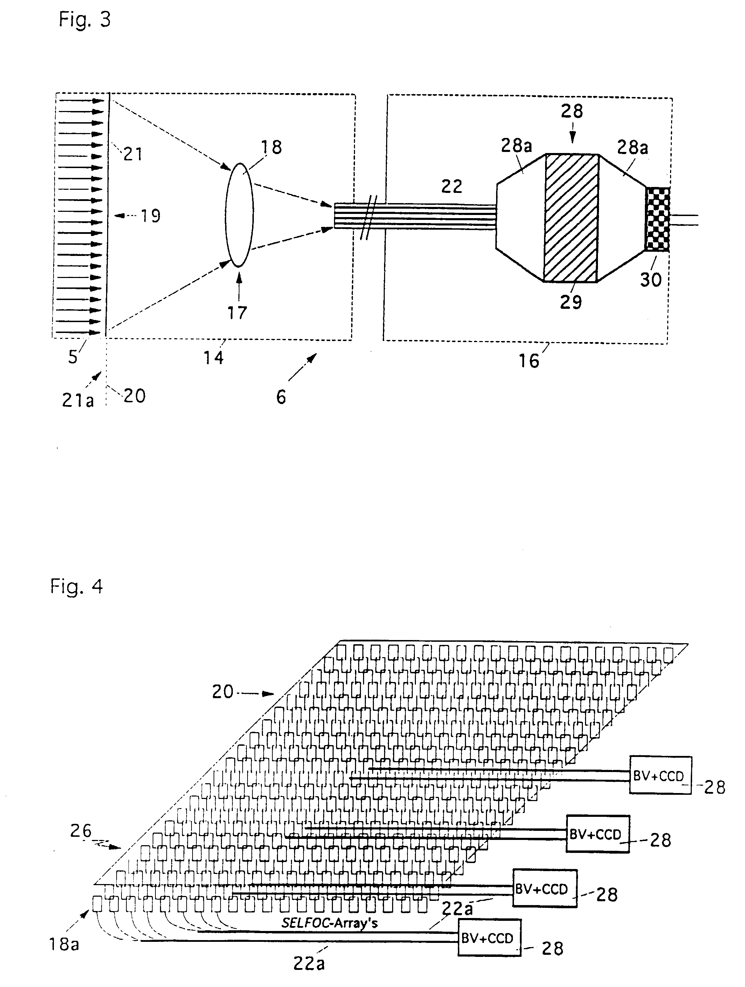

Unterhalb des Tisches ist eine Kassette bzw. ein Bucky 5 angeordnet, an welcher eine Primärbild-Anordnung, sowie eine in Figur 2 und 3 näher dargestellte optische Anordnung 6 zum Uebertragen und Umwandeln eines Primärbilds 20 in elektrische Signale vorgesehen ist. Von der Anordnung 6 werden die optischen Signale über eine Leitung 7 einer EDV-Anlage 8 zugeführt. Im Rechner 9 der EDV-Anlage werden die empfangenen Signale verarbeitet, über Leitungen 10 an Terminals 11 und/oder wahlweise an einen Speicher 12 oder einen Plotter 13 abgegeben. Die Anordnung 6 zum Uebertragen und Umwandeln der Röntgenbilder kann selbstverständlich auch statt auf einer Kassette bzw. einem Bucky 5 direkt am Tisch 4 befestigt sein oder anderweitig gehalten werden. Wesentlich ist dabei, dass eine Primärbild-Anordnung 21a vorgesehen ist, welche die dem Patienten 3 durchtretenden Röntgenstrahlen in Licht umwandelt, und dass das so erzeugte Primärbild 20 durch die optische Anordnung 6 erfasst und in elektrische Signale umgewandelt werden können.

Gemäss Figur 2 und 3 weist die optische Anordnung 6 ein schematisch dargestelltes Optik-Gehäuse 14 auf, das mittels einer Verbindungsanordnung 15 mit einem Wandler-Gehäuse 16 verbunden ist. Im Optik-Gehäuse 14 sind 16 optische Systeme 17 mit einer Linsenanordnung 18 so vorgesehen, dass jede der Linsenanordnungen eines der Segmente 19 erfasst, in welche das Primärbild 20 unterteilt ist. Das Primärbild 20 entsteht auf einer Primärbild-Anordnung, die als Szintillator 21 ausgebildet ist, der im Bucky 5 angeordnet ist. Durch die Linsen 18 der optischen Systeme 17 werden die Segmente 19 des Primärbilds 20 jeweils auf einen Glasfaser-Bildleiter 22 abgebildet, wobei jeweils vier Bildleiter 22 einer Reihe 23, 24, 25 und 26 zusammengefasst sind. Die Bildleiter 22 sind jeweils mittels einer zweiteiligen Steckerverbindung 27a bzw. 27b mit einer Wandleranordnung 28 verbunden, die einen Bildverstärker 29 und eine CCD-Kamera 30 enthält. Beim Bildverstärker handelt es sich um einen MCP-Bildverstärker (Microchannelplates), bei dem die auf der Photokathode anstehenden Elektronen in Halbleiterkanälen (Micro-Channels) beschleunigt und verstärkt werden, bevor sie auf einem Phosphor wieder in Licht umgewandelt werden. Es sind auch Bildverstärker ohne MCP einsetzbar.

Die Bildleiter sind konventionelle Glasfaser-Bildleiter bestehend aus kohärent angeordneten Fasern mit einem Durchmesser von typisch 10 Mikrometern oder kleiner, woraus sich eine Auflösung von 50 Linienpaaren pro Millimeter ergibt. Als CCD-Kamera eignen sich besonders konventionelle "ICCD's" mit einer Auflösung von 1024x1024 Pixels. Sofern zwei der Wandleranordnungen 28 gemäss Figur 2 zusammengefasst werden sollen, um Kosteneinsparung zu erreichen, können auch nur zwei ICCD-Kameras mit einer Auflösung von 2044x2033 vorgesehen werden.

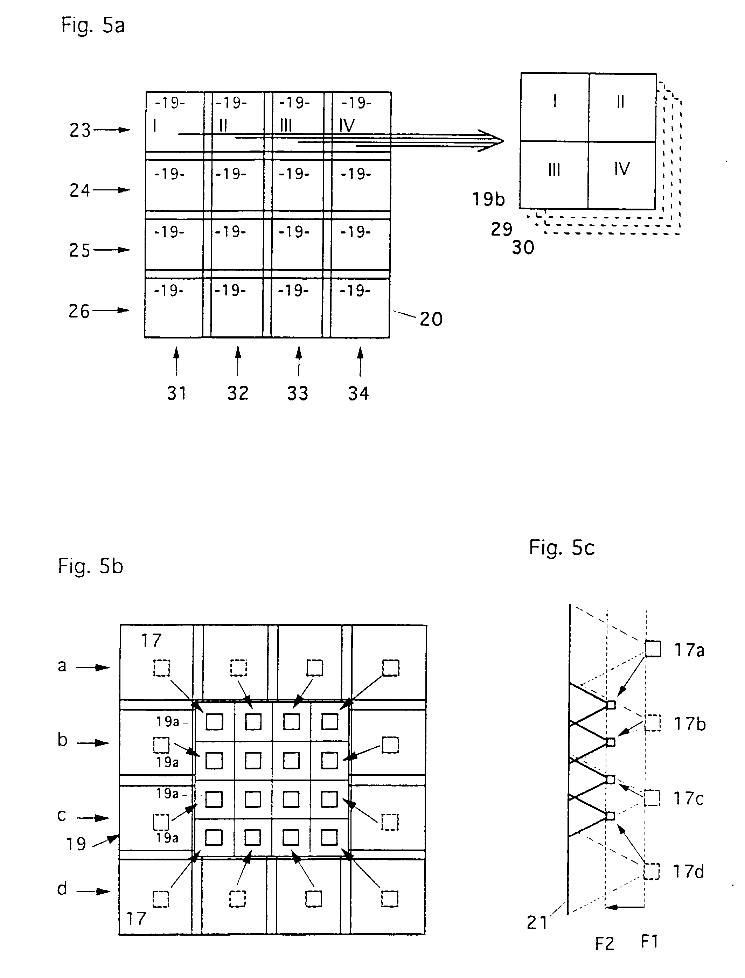

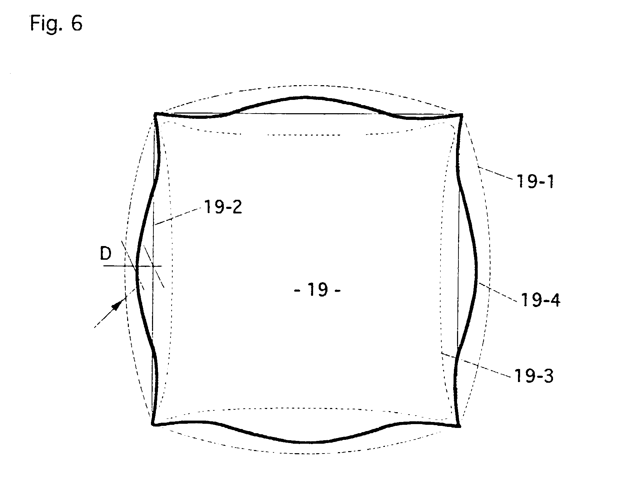

Die optischen Systeme 17 bzw. die Linsen 18 sind so ausgelegt, dass sich die Segmente 19 im Randbereich leicht überlappen, wie dies aus Figur 5a und 6 ersichtlich ist. Da die Position der Linsen 18 und die Anschlüsse der Bildleiter 22 an den Bildverstärker 29 definiert sind, ist die Position der einzelnen Segmente I, II, III und IV einer zusammengefassten Reihe 23 innerhalb eines Zwischenbildes 19b am Eingang des Bildverstärkers 29 bzw. der CCD-Kamera 30 bekannt, so dass sich die Bildinhalte nach dem Umwandeln in elektrische Signale leicht voneinander trennen lassen. Auf diese Weise lassen sich je nach Anwendungsfall, insbesondere je nach Grösse des Primärbilds 20 und der gewünschten Auflösung der Bildsignale auf der Leitung 7 bzw. des Sekundärbilds im Rechner 9 entsprechend viele optische Systeme 17 anordnen und im Hinblick auf die Charakteristik der Wandleranordnung 28 zu Gruppen oder Untergruppen innerhalb der Reihen 23 bis 26 oder Spalten 31 bis 34 zusammenfassen. Selbstverständlich ist auch die Bildung von diagonal verlaufenden oder andere geometrische Teilbilder erfassenden Gruppen von optischen Systemen möglich und durch entsprechende Zusammenschaltung der Bildleiter 22 auf einfache Weise erreichbar.

Durch die Anordnung der optischen Systeme 17 im Optik-Gehäuse 14 und die Anordnung der Wandleranordnungen 28 im Wandler-Gehäuse 16 kann ein einziges Wandler-Gehäuse mit relativ teuren Bildverstärkern 29 und ebenfalls teuren Kameras 30 verwendet werden, um verschiedene Bucky's 5 einer oder mehrerer Röntgenanlagen 1 auf diese Weise für die Digitalisierung von Röntgenbildern auszurüsten. Dadurch kann der Umrüstungspreis für einen Röntgenologen reduziert werden, da auch bei mehreren Tischen nur ein einziges Wandler-Gehäuse 16 und eine EDV-Anlage 8 benötigt, sofern er zur gleichen Zeit jeweils nur an einem Tisch arbeitet. Es sind auch Anwendungsfälle denkbar, in welchen jedem einzelnen Lichtleiter 22 eine Wandleranordung 28 zugeordnet ist, sodass die Zusammenfassung der Teilbilder zu einem Sekundärbild elektronisch in der EDV-Anlage 8 erfolgt. Bei der Anordnung gemäss Fig. 2 ergeben sich dadurch 16 Wandler 28, was einen nicht unerheblichen konstruktiven Mehraufwand bedeutet, aber technisch möglich ist.

Figuren 5b und 5c zeigen ein abgewandeltes Ausführungsbeispiel, bei welchem die optischen Systeme 17 aus einer Fokus-Position F1 in eine Fokus-Position F2 verlagerbar sind. Dabei wird durch eine nicht dargestellte Schienen-Halteanordnung sowohl der Abstand zwischen Szintillator 21 und damit Primärbild 20 reduziert, als auch gleichzeitig der Abstand der optischen Systeme 17 zueinander halbiert. Dadurch wird die Fläche jedes Segments 19a halbiert, was zu einer Verdoppeltung der Auflösung führt.

Durch entsprechende Abstimmung der optischen Eigenschaften von Szintillator, Optik, Bildleiter, Bildverstärker und CCD-Kameras kann eine in der Röntgentechnik übliche Auflösung erreicht werden. Diese beträgt gleich oder grösser 2,5 Linienpaare pro Millimeter bei einer Bildgrösse von 400mm x 400 mm und mehr als 5 Linienpaare pro Millimeter bei einer Bildgrösse von 200mm x 200mm.

Zur Optimierung der Abbildungseigenschaften der Gesamtanordnung wird erfindungsgemäss vorgesehen, dass sich die einzelnen Segmente bzw. die Teilbilder überlappen. Vorzugsweise beträgt die Randüberlappung 4 bis 10 %, bezogen auf die Kantenlänge eines Segments bzw. Teilbilds 19. Die Ueberlappung der Teilbilder löst sich bei der EDV-Verarbeitung ohne weiteres ermitteln und kompensieren. Die Ueberlappung wird deshalb vorgesehen, weil Bildverstärker 29 und Linsenanordnung 18 das Bild unterschiedlich verzerren. Gemäss Figur 6 verzeichnet das Objektiv leicht tonnenförmig, so dass sich nach der Linse 18 ein Bild 19-1 ergibt. Der Bildverstärker 29 verzeichnet dagegen leicht kissenförmig, so dass er rechteckige Bilder der Sollform 19-2 in der Kissen-Form 19-3 wiedergibt. Das resultierende Bild nach optischer Erfassung und Bildverstärkung stellt sich dementsprechend als resultierendes Bild 19-4 dar. Aus der Differenz D zwischen Sollform 19-2 und resultierendem Bild 19-4 ergibt sich die vorgeschlagene Soll-Ueberlappung der einzelnen Segmente bzw. Teilbilder um etwa 4 % bis 10 %.

Gemäss Figur 4 kann alternativ zu den einzelnen optischen Systemen gemäss Figur 2 bis 6 eine grosse Anzahl von Micro-Linsen 18a vorgesehen sein, die direkt mit einem als "Rod Lens" (Grandient-Index-Lens) ausgebildeten Bildleiter 22a verbunden sind. Gemäss Figur 4 sind in einer Reihe bzw. einem Array 26a zwanzig Mikrolinsen 18a und ebensoviele Bildleiter 22a angeordnet, so dass jede der Mikrolinsen etwa 1/20 (plus Ueberlappung) der Breite des Primärbilds 20 erfasst. Die Bildleiter 22a können sowohl starr als auch flexibel ausgebildet sein. Die Zusammenschaltung der einzelnen Mikrolinsen und die Verarbeitung in der Wandleranordnung 28 erfolgt analog Figur 2, wobei lediglich aufgrund der grösseren Anzahl von Mikrolinsen 18a eine grössere Anzahl von Teilbildern 19 und auch von Zwischenbildern 19b (Figur 5a) erzeugt wird. Derartige Array's sind unter der Bezeichnung Selfoc-Rodlenses (SRL) im Markt erhältlich.

Zur Lichtübertragung vom Ausgang des Bildleiters 22 zum Eingang des Bildverstärkers 29 sowie vom Ausgang des Bildverstärkers 29 zum Eingang der CCD-Kamera 30 hat sich ein Taper 28a bewährt. Die Ausgangsseite des Bildverstärkers 29 weist eine grössere Fläche auf, als auf der CCD-Kamera 30 abbildbar ist. Um die Bildfläche zu reduzieren, wird der Taper 28a eingesetzt. Um die Bildfläche vom Bildleiter 22 auf den Bildverstärker 29 aufzuweiten, ist ebenfalls ein Taper 28a vorgesehen. Derartige Taper sind z.B. bei der Firma Schott (USA) oder Collimated Holes (USA) als Zubehör zu Bildverstärkern erhältlich. Als ICCD-Kamera 30 wurde für Versuche eine IL800-Kamera der Firma Philips erfolgreich eingesetzt.

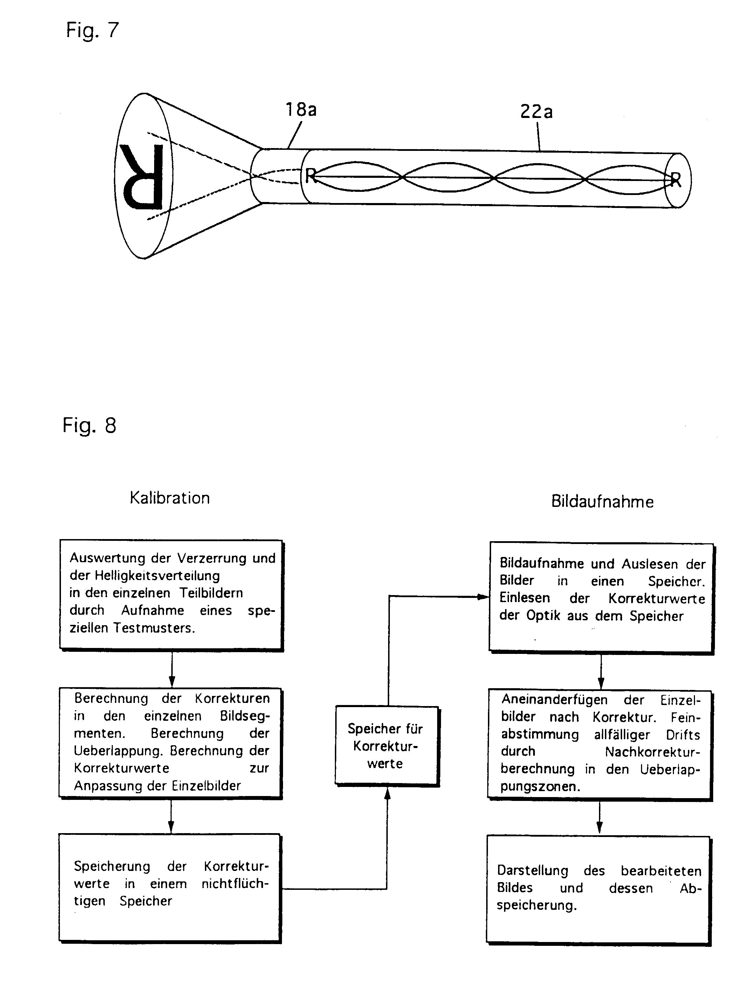

Figur 8 zeigt eine beschriftete Blockdiagramm-Anordnung, aus welcher der Ablauf einer Kalibration und einer Bildaufnahme ersichtlich ist.

## Patentansprüche

1. Optische Anordnung zum Übertragen und Umwandeln von Röntgenbildern, die auf einer flächigen Primärbild-Anordnung (21a) mit einer Lichtemission im Bereich des sichtbaren Spektrums erzeugt werden,
mit einer Mehrzahl von optischen Systemen (17) zur Erzeugung einer Abbildung jeweils eines einem Einzel-Segment (19, 19a) des Primärbildes (20) entsprechenden Teilbildes (19), welche Abbildungen einer Wandleranordnung (28) zugeführt sind, durch die Lichtsignale in verarbeitbare elektrische Signale umwandelbar sind, dadurch gekennzeichnet, dass zwischen den optischen Systemen (17) und der Wandleranordnung (28) optische Bildleiter (22) angeordnet sind, dass die Bildleiter (22) in Gruppen zur Kombination von Teilbildern (19) zu jeweils einem zwischenbild (19b) zusammengefasst sind, so dass jedes zwischenbild wenigstens zwei Segmente des Primärbildes (20) enthält, und dass jede Gruppe von Bildleitern (22) ausgangsseitig mit dem Eingang jeweils eines Wandlers (28) der Wandleranordnung verbunden ist, um das betreffende Zwischenbild (19b) diesem Wandler zuzuführen.

2. Optische Anordnung nach Anspruch 1, dadurch gekennzeichnet, dass die optischen Systeme (17) jeweils eine Linsenanordnung (18) enthalten.

3. Optische Anordnung nach Anspruch 1 oder 2, in welcher die optischen Systeme (17) matrixartig in Reihen und Spalten angeordnet sind, dadurch gekennzeichnet, dass die Teilbilder (19) ausgangsseitig spalten- oder reihenweise durch die optischen Bildleiter (22) zu Zwischenbildern (19b) zusammengefasst sind.

4. Optische Anordnung nach einem der vorangegangenen Ansprüche, dadurch gekennzeichnet, dass die optischen Systeme (17) parallel und senkrecht zur Primärbild-Anordnung verlagerbar angeordnet sind, um kleinere oder grössere Segmente (19, 19a) des Primärbildes (20) abzubilden.

5. Optische Anordnung nach einem der vorangegangenen Ansprüche, dadurch gekennzeichnet, dass die optischen Systeme Micro-Linsen (18a) aufweisen, die direkt mit jeweils einem Bildleiter (22) verbunden sind.

6. Optische Anordnung nach einem der vorangegangenen Ansprüche, dadurch gekennzeichnet, dass zwischen dem Ausgang jeder Gruppe von Bildleitern (22) und dem zugeordneten Wandler (28) ein Bildverstärker (29) geschaltet ist.

7. Optische Anordnung nach Anspruch 6, dadurch gekennzeichnet, dass zwischen dem Ausgang der Gruppe von Bildleitern (22) und dem Eingang des Bildverstärkers (29) und/ oder zwischen dem Ausgang des Bildverstärkers (29) und dem Wandler (28) wenigstens ein Taper (28a) angeordnet ist, vorzugsweise zwei Taper angeordnet sind.

8. Optische Anordnung nach einem der vorangegangenen Ansprüche, dadurch gekennzeichnet, dass die optischen Systeme (17) und die Bildleiter (22) in einem Optik-Gehäuse (14) angeordnet sind, das als Ersatz für die Rückwand eines Bucky's (5) einer Röntgenanlage (1) mit diesem verbindbar ist.

9. Optische Anordnung nach einem der vorangegangenen Ansprüche, dadurch gekennzeichnet, dass die Bildleiter (22) mittels einer lösbaren, zweiteiligen Steckerverbindung (27a, 27b) mit der Wandleranordnung (28) bzw. dem Bildverstärker (29) verbunden sind.

10. Optische Anordnung nach einem der vorangegangenen Ansprüche, dadurch gekennzeichnet, dass die Wandler (28) zusammen in einem Wandler-Gehäuse (16) angeordnet sind.

11. Optische Anordnung nach einem der Ansprüche 1 bis 7, dadurch gekennzeichnet, dass die optischen Systeme (17) und die Bildleiter (22) in einem Optik-Gehäuse (14) angeordnet sind, das als Ersatz für die Rückwand eines Bucky's (5) einer Röntgenanlage (1) mit diesem verbindbar ist,
dass die Bildleiter (22) mittels einer lösbaren, zweiteiligen Steckerverbindung (27a, 27b) mit der Wandleranordnung (28) bzw. dem Bildverstärker (29) verbunden sind und dass
die Wandler (28) zusammen in einem Wandler-Gehäuse (16) angeordnet sind,
wobei das Optikgehäuse (14) und das Wandlergehäuse (16) durch eine Verbindungsanordnung (15) miteinander lösbar verbunden sind, und wobei der eine Teil (27b) der Stekkerverbindung (27a, 27b) derart am Wandler-Gehäuse (16) und der komplementäre zweite Teil (27a) der Steckerverbindung derart am Optik-Gehäuse (14) angeordnet ist,
dass beim Verbinden der beiden Gehäuse jeder Bildleiterausgang mit dem zugeordneten Wandler (28) bzw. Bildverstärker (29) verbunden ist.

12. Optische Anordnung nach Anspruch 1, dadurch gekennzeichnet, dass die Wandler (28) Kameras sind, welche die zwischenbilder (19b) in digitale elektrische Signale umwandeln, und dass die Kameras ausgangsseitig mit dem Eingang einer EDV-Anlage (8) verbunden sind, welche die Zwischenbilder (19b) elektronisch zu Gesamtbildern zusammenfügt und von welcher die Gesamtbilder auf Hardcopy oder Bildschirm ausgebbar sind.

13. Verfahren zum Übertragen und Umwandeln von Röntgen-Primärbildern (20) in elektrische Signale, wobei das Primärbild (20) durch eine Mehrzahl von optischen Systemen (17) in Teilbilder (19, 19a) zerlegt wird, dadurch gekennzeichnet, dass durch optische Mittel (22) wenigstens zwei zwischenbilder (19b) erzeugt werden, die jeweils wenigstens zwei der Teilbilder (19, 19a) enthalten, und dass jedes zwischenbild (19b) durch jeweils einen Wandler (28) in elektronische Bildsignale umgeformt wird.

14. Verfahren nach Anspruch 13, dadurch gekennzeichnet, dass die den Zwischenbildern (19b) entsprechenden elektronischen Bildsignale zur Erzeugung eines Sekundärbildes in einer Datenverarbeitungsanlage zusammengeführt werden.

## Claims

1. An optical arrangement for transmitting and converting X-ray images which are produced on a flat primary image arrangement (21a) with a light emission in the region of the visible spectrum,
with a multitude of optical systems (17) for producing an image in each case of a field (19) corresponding to an individual segment (19, 19a) of the primary image (20), which images are led to a transducer arrangement (28) by which means the light signals can be converted into processable electrical signals, characterized in that optical image guides (22) are arranged between the optical systems (17) and the transducer arrangement (28), that the image guides (22) are grouped together in groups for combining fields (19) in each case into an intermediate image (19b) so that each intermediate image contains at least two segments of the primary image (20), and that each group of image guides (22) on the output side is connected to the input in each case of a transducer (28) of the transducer arrangement in order to lead the intermediate image (19b) concerned to this transducer.

2. An optical arrangement according to claim 1, characterized in that the optical systems (17) in each case contain a lens arrangement (18).

3. An optical system according to claim 1 or 2, in which the optical systems (17) are arranged in a matrix manner in rows and columns, characterized in that the fields (19) on the output side are grouped together column-wise and row-wise by the optical image guide (22) into intermediate images (19b).

4. An optical arrangement according to one of the preceding claims, characterized in that the optical systems (17) are displaceably arranged parallel and perpendicular to the primary image arrangement in order to image smaller or larger segments (19, 19a) of the primary image (20).

5. An optical arrangement according to one of the preceding claims, characterized in that the optical systems comprise microlenses (18a) which are directly connected in each case to an image guide (22).

6. An optical arrangement according to one of the preceding claims, characterized in that between the output of each group of image guides (22) and the assigned transducer (28), an image intensifier (29) is added.

7. An optical arrangement according to claim 6, characterized in that between the output of the group of image guides (22) and the input of the image intensifier (29) and/or between the output of the image intensifier (29) and the transducer (28), there is arranged at least one taper (28a), preferably two tapers.

8. An optical arrangement according to one of the preceding claims, characterized in that the optical systems (17) and the image guides (22) are arranged in an optic housing (14) which, as a replacement for the rear wall of a bucky (5) of an X-ray installation (1), is connectable to this bucky.

9. An optical arrangement according to one of the preceding claims, characterized in that the image guides (22), by way of a releasable, two-part plug connection (27a, 27b), are connected to the transducer arrangement (28) or the image intensifier (29).

10. An optical arrangement according to one of the preceding claims, characterized in that the transducers (28) are arranged together in a transducer housing (16).

11. An optical arrangement according to one of the claims 1 to 7, characterized in that the optical systems (17) and the image guides (22) are arranged in an optic housing (14) which, as a replacement for the rear wall of a bucky (5) of an X-ray installation (1), is connectable to this bucky,
that the image guides (22), by way of a releasable, two-part plug connection (27a, 27b), are connected to the transducer arrangement (28) or the image intensifier (29) and that
the transducers (28) are arranged together in a transducer housing (16),
wherein the optic housing (14) and the transducer housing (16) are releasably connected to one another by a connection arrangement (15), and wherein the one part (27b) of the plug connection (27a, 27b) is so arranged on the transducer housing (16), and the complementary second part (27a) of the plug connection is so arranged on the optic housing (14), that on connecting both housings each image guide output is connected to the assigned transducer (28) or image intensifier (29).

12. An optical arrangement according to claim 1, characterized in that the transducers (28) are cameras which convert the intermediate images (19b) into digital electrical signals, and that the cameras on the output side are connected to the input of a computer installation (8) which electronically joins together the intermediate images (19b) into complete images and from which the complete images may be outputted onto a hard copy or monitor.

13. A method for transmitting and converting X-ray primary images (20) into electrical signals, wherein the primary image (20) is broken up by a multitude of optical systems (17) into fields (19, 19a), characterized in that by way of optical means (22) at least two intermediate images (19b) are produced which in each case contain at least two of the fields (19, 19a), and that each intermediate image (19b) in each case by way of a transducer (28), is transformed into electronic image signals.

14. A method according to claim 13, characterized in that the electronic image signals corresponding to the intermediate images (19b) are led together in a computer installation for producing a secondary image.

## Revendications

1. Dispositif optique pour transmettre et convertir des radiographies qui sont produites sur un dispositif d'image primaire plan (21a) grâce à une émission de lumière dans la plage du spectre visible,
comportant plusieurs systèmes optiques (17) destinés à produire chacun une représentation d'une image partielle (19) correspondant à un segment individuel (19, 19a) de l'image primaire (20), les représentations étant transmises à un dispositif convertisseur (28) grâce auquel des signaux lumineux peuvent être convertis en signaux électriques aptes à être traités,
caractérisé en ce que des guides d'image optiques (22) sont disposés entre les systèmes optiques (17) et le dispositif convertisseur (28), en ce que les guides d'image (22) sont groupés en vue de la combinaison d'images partielles (19) pour former à chaque fois une image intermédiaire (19b), de sorte que chaque image intermédiaire contient au moins deux segments de l'image primaire (20), et en ce que chaque groupe de guides d'image (22) est relié, côté sortie, à l'entrée d'un convertisseur (28) du dispositif convertisseur, pour transmettre au convertisseur l'image intermédiaire (19b) concernée.

2. Dispositif optique selon la revendication 1, caractérisé en ce que les systèmes optiques (17) contiennent chacun un dispositif de lentille (18).

3. Dispositif optique selon la revendication 1 ou 2, dans lequel les systèmes optiques (17) sont disposés en forme de matrice, en lignes et en colonnes, caractérisé en ce que les images partielles (19) sont réunies par colonnes ou par lignes, côté sortie, par les guides d'image optiques (22) pour former des images intermédiaires (19b).

4. Dispositif optique selon l'une des revendications précédentes, caractérisé en ce que les systèmes optiques (17) sont disposés pour pouvoir être décalés parallèlement et perpendiculairement au dispositif d'image primaire afin de représenter des segments (19, 19a) plus ou moins grands de l'image primaire (20).

5. Dispositif optique selon l'une des revendications précédentes, caractérisé en ce que les systèmes optiques comportent des micro-lentilles (18a) qui sont reliées chacune directement à un guide d'image (22).

6. Dispositif optique selon l'une des revendications précédentes, caractérisé en ce qu'un intensificateur d'image (29) est monté entre la sortie de chaque groupe de guides d'image (22) et le convertisseur (28) associé.

7. Dispositif optique selon la revendication 6, caractérisé en ce qu'il est prévu, entre la sortie du groupe de guides d'image (22) et l'entrée de l'intensificateur d'image (29) et/ou entre la sortie de l'intensificateur d'image (29) et le convertisseur (28), au moins un raccord conique (28a), de préférence deux raccords coniques.

8. Dispositif optique selon l'une des revendications précédentes, caractérisé en ce que les systèmes optiques (17) et les guides d'image (22) sont disposés dans un boîtier de système optique (14) qui, en remplacement de la paroi arrière d'une cassette (5) d'une installation de radiographie (1), est apte à être reliée à celle-ci.

9. Dispositif optique selon l'une des revendications précédentes, caractérisé en ce que les guides d'image (22) sont reliés au dispositif convertisseur (28) et à l'intensificateur d'image (29) à l'aide d'un connecteur amovible en deux parties (27a, 27b).

10. Dispositif optique selon l'une des revendications précédentes, caractérisé en ce que les convertisseurs (28) sont disposés ensemble dans un boîtier de convertisseurs (16).

11. Dispositif optique selon l'une des revendications 1 à 7,
caractérisé en ce que les systèmes optiques (17) et les guides d'image (22) sont disposés dans un boîtier de système optique (14) qui, en remplacement de la paroi arrière d'une cassette (5) d'une installation de radiographie (1), peut être relié à celle-ci,
en ce que les guides d'image (22) sont reliés au dispositif convertisseur (28) et à l'intensificateur d'image (29) à l'aide d'un connecteur amovible en deux parties (27a, 27b),
et en ce que les convertisseurs (28) sont disposés ensemble dans un boîtier de convertisseurs (16),
étant précisé que le boîtier de système optique (14) et le boîtier de convertisseurs (16) sont reliés de façon amovible par un dispositif de liaison (15), et que la première partie (27b) et la seconde partie complémentaire (27a) du connecteur (27a, 27b) sont disposées respectivement sur le boîtier de convertisseurs (16) et sur le boîtier de système optique (14) de telle sorte que lorsque les deux boîtiers sont reliés, chaque sortie de guide d'image soit reliée au convertisseur (28) et à l'intensificateur d'image (29) associés.

12. Dispositif optique selon la revendication 1, caractérisé en ce que les convertisseurs (28) sont des caméras qui convertissent les images intermédiaires (19b) en signaux électriques numériques, et en ce que les caméras sont reliées, côté sortie, à l'entrée d'une installation informatique (8) qui réunit les images intermédiaires (19b) par voie électronique pour former des images entières et à partir de laquelle les images entières peuvent être sorties sur un support papier ou sur un écran.

13. Procédé pour transmettre des radiographies primaires (20) et pour les convertir en signaux électriques, selon lequel l'image primaire (20) est décomposée en images partielles (19, 19a) par plusieurs systèmes optiques (17), caractérisé en ce qu'on produit à l'aide de moyens optiques (22) au moins deux images intermédiaires (19b) qui contiennent chacune au moins deux des images partielles (19, 19a), et en ce que chaque image intermédiaire (19b) est transformée par un convertisseur (28) en signaux d'image électroniques.

14. Procédé selon la revendication 13, caractérisé en ce que les signaux d'image électroniques qui correspondent aux images intermédiaires (19b) sont réunis dans une installation informatique en vue de la production d'une image secondaire.
